# EUROPEAN PATENT SPECIFICATION

(11) **EP 0 522 762 B1**
(45) Date of publication and mention of the grant of the patent: **16.09.1998**
(21) Application number: 92305976.0
(22) Date of filing: 29.06.1992
(51) Int. Cl.: H04M 1/72, H04M 1/02, H04B 1/034

(54) **Mobile phone**
Mobiles Telefon
Téléphone mobile

(30) Priority: 09.07.1991 FI 913321
(43) Date of publication of application: 13.01.1993
(73) Proprietor: NOKIA MOBILE PHONES LTD., 24101 Salo (FI)
(72) Inventor: Myrskog, Markku, SF-90570 Oulu (FI); Vanhanen, Petteri, SF-90940 Jaali (FI); Seppanen, Arto, SF-90460 Oulansalo (FI); Pitkänen, Risto, SF-25260 Valiko (FI); Uronen, Lasse, SF-24280 Salo (FI)
(74) Representative: Frain, Timothy John

(56) References cited:
- EP-A- 505 932
- EP-A- 0 276 403
- EP-A- 0 319 108
- EP-A- 0 344 988
- DE-A- 3 610 202
- DE-A- 3 822 848
- DE-A- 4 138 342
- DE-U- 9 012 889

## Description

The invention relates to a telephone, particularly a mobile phone, the use of which requires a replaceable information unit and a replaceable battery unit in the handset, and which has a closable compartment for the information unit.

In order to use the telephone, some mobile phone systems require an information unit to be located in the handset, in the form of a so called smart card, or in the form of a unit provided with a connector edge or a "plug-in SIM". The information unit contains in a coded form essential information relating to the use of the mobile phone, e.g. the authorization information required to identify the user in question.

Previously information on e.g. a magnetic card was read with a reading device, for example according to the standard IS 7816 (ref. the German Netz-C handset). Then the card is not placed in the handset, and it could be lost or otherwise misplaced away from the equipment. An improvement to this is sought after, e.g. with the solution known by the patent application EP-A-0 276 403, whereby the authorization card in the form of a chip card is placed in a compartment of the hand-set, the compartment being closable with a cover. On the bottom of this compartment are pressure contacts, which are activated at the end phase of the closing of the cover. Said patent application aims generally at hiding the chip card and protecting the contacts, and as can be seen in the figures relating to this patent application, separate mechanical solutions are required only in order to mount the card.

On the other hand in GSM mobile phones it is intended to use a plug-in SIM (Subscriber Identity Module), i.e a unit containing mainly electronic memory means. Such a circuit can be mounted inside the handset's housing or below a separate cover, but anyhow so that the installation is semi-permanent, so that the user can replace the circuit, as desired. Opening the housing requires user training and this kind of operation to be considered already in the design of the handset. The fault probability will increase when the housing is often opened. On the other hand, realizing a separate cover requires its own mechanics and plenty of space, thus increasing the manufacturing cost of the equipment.

EP-A-505932 which forms part of the state of the art under Article 54(3) EPC, discloses a chip card holder for a mobile phone. It provides a protected recess of depth corresponding to the card thickness and matching the shape of the card inside the battery housing. The card is inserted longitudinally into the recess and held in place by a battery pack.

The aim of the invention is to design the placement of the information unit so that it is sufficiently well protected during use of the telephone, and so that it can be simply replaced without the above mentioned disadvantages or additional costs.

According to the invention there is provided a telephone, particularly a mobile phone, the use of which requires a replaceable information unit a replaceable battery unit in the handset, and which has a closable compartment for the information unit in the housing, characterized in that;
the telephone further comprises a replaceable battery unit in the handset;
the compartment is closed by the battery unit; and
the replaceable information unit can be inserted into the compartment with a major face of the replaceable information unit leading.

Further advantageous embodiments of the invention are presented in the dependent claims.

The solution according to the invention simplifies the construction of the handset, because there is no need to construct a separate cover or housing for the protection of the information unit, as the battery unit is used as cover. It is however possible to install, replace or remove the information unit without opening the handset housing itself, in a similar way as when the battery is replaced, which is an operation known to the user as such. There is no inconvenience in removing the battery or battery unit for the time when the information unit is replaced, as it is not possible to replace the information unit during a call.

The inventive idea is illustrated schematically in a simplified way in the figures. Figures 1 and 2 show the location of the smart card below the battery unit in a mobile phone, and figure 3 shows the location of a plug-in SIM below the battery unit, and figure 4 shows how a smart card/plug-in SIM through the battery space is placed in the housing below the earpiece.

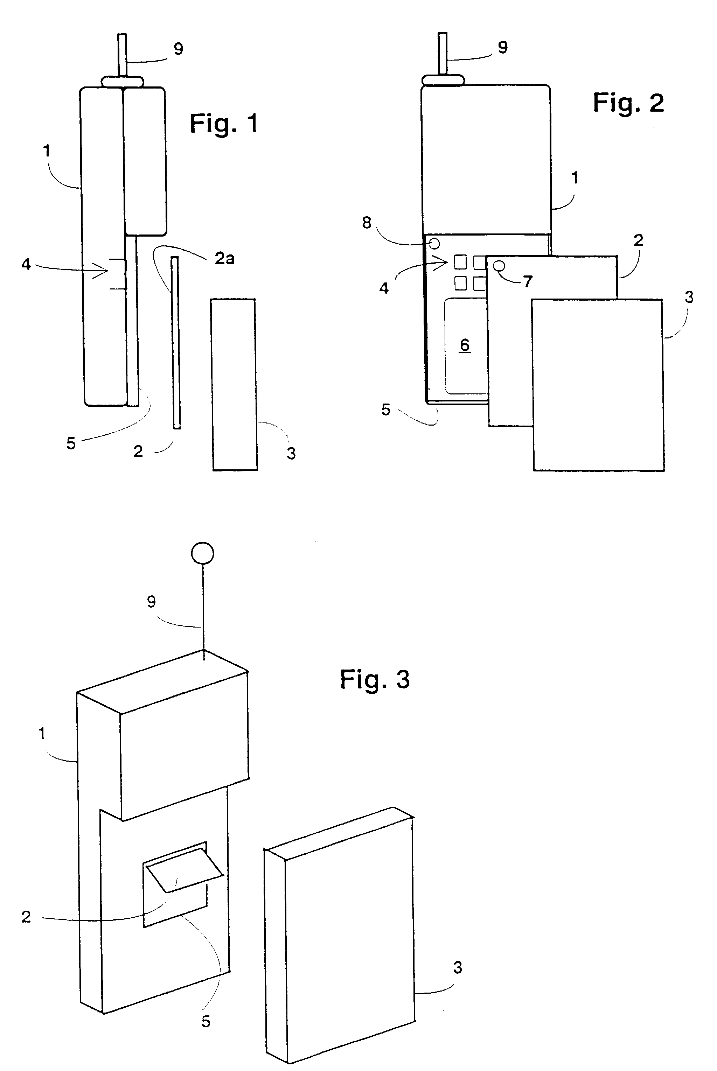

In figures 1 and 2 the handset of the mobile phone has a body housing 1, from which extends an antenna 9. Connected to the housing in a way known per se is a battery unit 3, which via contacts (not shown) supplies operating voltage to the handset. When the battery unit 3 is in its place, it is close to the body and forms a part of the uniform handset exterior.

According to the invention, the smart card 2 required to operate the mobile phone is placed, for the period of use, into the open compartment 5 between the body 1 and the battery unit 3. On the bottom of the compartment 5 there are contacts 4 or contact strips, contacting the smart card 2 contacts 2a when the card 2 is placed into the compartment and when the battery 3 is mounted above the card. In the figure the contacts are only indicated; there may be a required number of them and suitably they can be elastic, so that a proper contact is guaranteed between 4 and 2a. Through the contacts 4, 2a an electrical contact is provided in order to read the information of the card or the information unit. The reading may be performed by any process known to a person skilled in the art. With suitable mechanical solutions it is possible to provide for the electrical contact between the card and the telephone to be effective before there is an electrical connection between the telephone and the battery pack.

The compartment 5 as well as the card 2 may be provided with suitable identification means 7 and 8 (in figure 2), respectively, e.g. as spots of paint or as a hole/pin-arrangement, so that the user easily can place the card in the correct direction into the compartment. Instructions for use and installation, informations about the manufacturer etc. on a sticker, for example, may be placed in the empty space at the bottom of the compartment 5.

When the battery or the battery package 3 is put in its place against the body 1 of the handset, the smart card 2 will stay within the space created in the compartment, well protected against dust and moisture as well as against mechanical stress, when the edges of the compartment are made suitably sealing. Now the card will also be safely kept with the telephone.

Figure 3 shows schematically how, according to the invention, a so called plug-in SIM unit 2 is placed below the battery unit 3. A suitable compartment or opening 5 is made in the housing 1 of the handset, in which the SIM unit is readily at hand for installation or replacement. The unit 2 is connected to a reading device (not shown) known per se, which can be mounted on a circuit board directly under the opening 5, and which further comprises a plastic holder above the opening, into which the SIM unit is placed for reading. The reading device also has contact strips for the corresponding pins or strips (not shown) of the SIM unit. These contact strips have a similar function as the contacts 4 and 2a in figures 1 and 2. The holder further contains a locking mechanism known per se, so that the holder will rise to an angle of e.g. 30 degrees or into the position shown in figure 3 when the holder is suitably pressed and pushed with a finger, whereby the SIM unit can be put in its place, removed or replaced. After this operation the SIM unit 2 is pressed down into the compartment 5. The edges between the battery unit 3 and the housing 1, or at least a suitable peripheral region around the compartment 5, is arranged as a sealing region with a separate sealing, so that the compartment is protected during use.

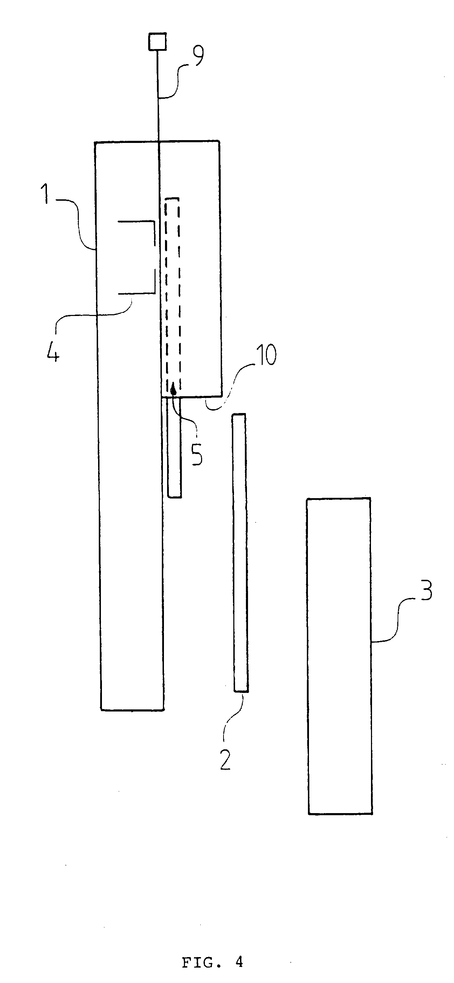

Figure 4 shows how the smart card/plug-in SIM 2 is placed into the housing 1 below the earpiece through the space defined by the battery package 3. According to figure 4 the SIM unit 2 is pushed into the compartment 5 through the end face 10 defined by the battery 4. In this solution the sensitive contacts 4 are hidden and thus not very easily damaged. During replacement of the battery 3 it is assured that the smart card 2 is held in its place. Thus there is no need to fear that the smart card would come out and be lost, and no separate fastening means are required for the card 2.

The inventive idea, i.e. the idea to use the battery unit as a cover for the information unit without any separate mechanical additional arrangements can be realized also in such a case that the battery unit is arranged under a battery cover in the handset housing. In this case the compartment 5 or the opening for the plug-in SIM unit 2 could be arranged in the battery space, below the batteries, but otherwise in the same way as in figure 3. Then during use the batteries will cover the compartment, and on the other hand the battery cover will conceal the battery space. Also in this case the compartment 5 is made just so large that it is easy to grip the SIM unit 2, but as small as possible, so that no foreign bodies or dirt can get into the inner parts of the housing. It would also be possible to provide the space of the compartment around the reading device with edges, which prevent foreign bodies from reaching other parts of the housing. When the junctions between the battery cover and the handset are made as sealing junctions, there is no need to separately seal the peripheral area between the battery and the compartment. The advantage of the invention is that there is no need to probe whether the smart card/SIM-unit 2 is in its place, because when the battery package 3 is out of position there also is no current available to activate the contacts 4. This requires that it is not be possible to supply the telephone with external charging or operating current when the battery is out of its place. Generally a telephone will not fit into its charging devices or into its car rack without the battery 3, and thus there is no risk of the telephone receiving operating current when the battery is out of position. An essential advantage of the invention is further that it is not possible to inadvertently remove or replace the smart card 2 when the currents are connected, because the battery 3 has to be removed in order to install the smart card.

The figures only show examples and many different modifications to these are conceivable. Thus, for example, the battery unit 3 of figure 1 could be placed into a recess formed in the longitudinal middle of the housing 1. Further to the solution according to figure 3 the battery package 3 could on the other hand be of the same length as the housing 1, so that it would cover e.g. half of the housing's transversal width. It would also be possible to locate the compartment for the SIM unit 5 at an edge or in a corner of the battery compartment, and not in the middle as in figure 3.

Several mechanical solutions are conceivable to fasten the battery unit 3, such as snap connectors, glide grooves and mouldings etc., formed in the housing 1 and the package 3. Identification means can further be arranged on the SIM unit, to facilitate its installation in the correct direction.

## Claims

1. A telephone, particularly a mobile phone, the use of which requires a replaceable information unit (2), and which has a closable compartment (5) for the information unit (2) in the housing (1), **characterized** in that;
the telephone further comprises a replaceable battery unit (3) in the handset;
the compartment (5) is closed by the battery unit (3); and
the replaceable information unit (2) can be inserted into the compartment (15) with a major face of the replaceable information unit (2) leading.

2. Telephone according to claim 1, **characterized** in that the information unit (2) is a smart card, and that the compartment (5) is formed by suitable edges in the surface of the housing (1), whereby contacts (4) are arranged on the bottom of the housing for the contacts (2a) of the smart card (2).

3. Telephone according to claim 1, **characterized** in that the information unit (2) is a "plug-in SIM" -unit (Subscriber Identity Module), and that the compartment (5) is a space accessible through an opening in the housing (1) surface, whereby the SIM unit (2) in the space is placed into a reading device known per se.

4. Telephone according to claim 1, **characterized** in that the information unit (2) is pushed into the compartment (5) through an opening in a surface (10) defined by the battery (3).

5. Telephone according to claim 4, **characterized** in that the compartment (5) is located below the earpiece.

6. Telephone according to any previous claim, **characterized** in that the reading device has a mechanism, whereby manipulating the mechanism the will cause the information unit (2) to rise from the housing in an angle relative the surface of the housing.

7. Telephone according to any previous claim, **characterized** in that a sealing is arranged around the compartment (5) between the housing (1) and the battery unit (3).

8. Telephone according to any previous claim, **characterized** in that markings (7, 8) are arranged on the information unit (2) and on the housing (1) to facilitate the installation of the unit (2) in the correct direction in the compartment (5).

## Patentansprüche

1. Telefon, insbesondere ein Mobiltelefon, für dessen Verwendung man eine austauschbare Informationseinheit (2) benötigt, und das in einem Gehäuse (1) ein verschließbares Fach (5) für die Informationseinheit (2) aufweist, **dadurch gekennzeichnet**, daß das Telefon ferner eine austauschbare Batterieeinheit (3) im Handapparat enthält; das Fach (5) durch die Batterieeinheit (3) geschlossen wird; und die austauschbare Informationseinheit (2) mit einer Hauptseite der austauschbaren Informationseinheit (2) voran in das Fach (5) einsetzbar ist.

2. Telefon nach Anspruch 1, **dadurch gekennzeichnet**, daß die Informationseinheit (2) eine "intelligente" Karte ist, und das Fach (5) durch geeignete Kanten in der Oberfläche des Gehäuses (1) gebildet ist, wobei für Kontakte (2a) der "intelligenten" Karte (2) Kontakte (4) auf dem Boden des Gehäuses angeordnet sind.

3. Telefon nach Anspruch 1, **dadurch gekennzeichnet**, daß die Informationseinheit (2) eine "plug-in SIM (Subscriber Identity Module)"-Einheit ist, und das Fach (5) als Raum ausgebildet ist, der über eine Öffnung in der Oberfläche des Gehäuses (1) zugänglich ist, wobei die SIM-Einheit (2) in dem Raum in einem allgemein bekannten Lesegerät angeordnet ist.

4. Telefon nach Anspruch 1, **dadurch gekennzeichnet**, daß die Informationseinheit (2) über eine durch die Batterie (3) definierte Öffnung in einer Oberfläche (10) in das Fach (5) gedrückt wird.

5. Telefon nach Anspruch 4, **dadurch gekennzeichnet**, daß das Fach (5) unterhalb der Hörmuschel angeordnet ist.

6. Telefon nach irgendeinem der vorangegangenen Ansprüche, **dadurch gekennzeichnet**, daß das Lesegerät einen Mechanismus aufweist, wobei durch Bedienung des Mechanismus die Informationseinheit (2) in einem Winkel relativ zur Gehäuseoberfläche aus dem Gehäuse gehoben wird.

7. Telefon nach irgendeinem der vorangegangenen Ansprüche, **dadurch gekennzeichnet**, daß um das Fach (5) zwischen dem Gehäuse (1) und der Batterieeinheit (3) eine Abdichtung angeordnet ist.

8. Telefon nach irgendeinem der vorangegangenen Ansprüche, **dadurch gekennzeichnet**, daß auf der Informationseinheit (2) und dem Gehäuse (1) Markierungen (7,8) angeordnet sind, um den Einbau der Einheit (2) in das Fach (5) in richtiger Orientierung zu erleichtern.

## Revendications

1. Téléphone, en particulier un téléphone mobile, dont l'utilisation nécessite une unité d'informations remplaçable (2) et qui comporte un compartiment refermable (5) destiné à l'unité d'informations (2) dans le boîtier (1), caractérisé en ce que
le téléphone comprend en outre une unité de batterie amovible (3) dans le combiné,
le compartiment (5) est fermé par l'unité de batterie (3), et
l'unité d'informations amovible (2) peut être introduite dans le compartiment (5) avec une face principale de l'unité d'informations amovible (2) en tête.

2. Téléphone selon la revendication 1, caractérisé en ce que l'unité d'informations (2) est une carte élaborée, et en ce que le compartiment (5) est formé par des bords appropriés dans la surface du boîtier (1), grâce à quoi des contacts (4) sont disposés au fond du boîtier pour les contacts (2a) de la carte élaborée (2).

3. Téléphone selon la revendication 1, caractérisé en ce que l'unité d'informations (2) est une unité "SIM enfichable" (module d'identité de l'abonné), et en ce que le compartiment (5) est un espace accessible par l'intermédiaire d'une ouverture dans la surface du boîtier (1), grâce à quoi l'unité SIM (2) dans cet espace est placée dans un dispositif de lecture connu en soi.

4. Téléphone selon la revendication 1, caractérisé en ce que l'unité d'informations (2) est poussée jusque dans le compartiment (5) par l'intermédiaire d'une ouverture dans une surface (10) définie par la batterie (3).

5. Téléphone selon la revendication 4, caractérisé en ce que le compartiment (5) est situé au-dessous de l'écouteur.

6. Téléphone selon l'une quelconque des revendications précédentes, caractérisé en ce que le dispositif de lecture comporte un mécanisme, grâce à quoi la manipulation du mécanisme amènera l'unité d'informations (2) à s'élever à partir du boîtier suivant un angle relativement à la surface du boîtier.

7. Téléphone selon l'une quelconque des revendications précédentes, caractérisé en ce qu'une étanchéité est réalisée autour du compartiment (5) entre le boîtier (1) et l'unité de batterie (3).

8. Téléphone selon l'une quelconque des revendications précédentes, caractérisé en ce que des repères (7, 8) sont disposés sur l'unité d'informations (2) et sur le boîtier (1) afin de faciliter l'installation de l'unité (2) suivant l'orientation correcte dans le compartiment (5).
